(19)

Europäisches
Patentamt
European
Patent Office
Office européen
des brevets

(11) **EP 2 266 273 B1**

(12) **EUROPEAN PATENT SPECIFICATION**

(45) Date of publication and mention
of the grant of the patent:
**12.04.2017 Bulletin 2017/15**

(51) Int Cl.:
***H04L 25/02*** *(2006.01)*     ***H04L 25/03*** *(2006.01)*
***H04B 7/06*** *(2006.01)*

(21) Application number: **09732013.9**

(86) International application number:
**PCT/SE2009/050178**

(22) Date of filing: **18.02.2009**

(87) International publication number:
**WO 2009/128767 (22.10.2009 Gazette 2009/43)**

(54) **MIMO SLOW PRECODING METHOD AND APPARATUS**

MIMO-LANGSAMPRÄKODIERUNGSVERFAHREN UND -VORRICHTUNG

PROCÉDÉ DE PRÉCODAGE LENT MIMO ET APPAREIL

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **18.04.2008 US 105313**

(43) Date of publication of application:
**29.12.2010 Bulletin 2010/52**

(73) Proprietor: **Telefonaktiebolaget LM Ericsson
(publ)**
**164 83 Stockholm (SE)**

(72) Inventors:
• **KRASNY, Leonid
Cary
North Carolina 27511 (US)**
• **HUI, Dennis
Cupertino, CA 95014 (US)**

(74) Representative: **Brann AB**
**P.O. Box 3690**
**Drottninggatan 27**
**103 59 Stockholm (SE)**

(56) References cited:
**EP-A- 1 871 017          US-A1- 2004 066 761
US-A1- 2007 160 156    US-A1- 2007 207 730**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present invention generally relates to pre-coding, and particularly relates to slow pre-coding in MIMO wireless communication systems.

**BACKGROUND**

Pre-coding is a technique for supporting multi-layer transmission in MIMO (multiple-input, multiple-output) radio systems. Pre-coding involves optimally focusing the power and direction of transmit antennas to improve signal quality reception. The transmit antennas can be optimally focused by matching pre-filter weights to channel and noise conditions. This way, multiple signal streams can be emitted from the transmit antennas with independent and appropriate weighting such that link throughput is maximized at the receiver.

The pre-filter weights are determined based on channel feedback information periodically received at the transmitter. In a pre-coded MIMO OFDM (orthogonal frequency division multiplexing) system with $n_T$ transmit antennas and $n_R$ receive antennas, the input-output relationship can be described as:

$$Y(f) = G(f)W(f)S(f) + N(f), \quad f \in [1, Nf] \qquad (1)$$

where Y($f$) is an $n_R$x1 received signal vector, G($f$) is an $n_R$x$n_T$ channel response matrix, **W**($f$) is an $n_T$x$Ns$ pre-coding matrix, S($f$) is an $Ns$x1 vector of the transmitted streams, N($f$) is an $n_R$x1 noise (including interference) vector based on an $n_R$x$n_R$ noise correlation matrix **K**$_n$($f$), $Nf$ represents the number of OFDM sub-carriers and $Ns$ represents the number of transmitted streams. Optimal performance of the MIMO system is achieved when ideal channel state information is available at the transmitter and the pre-coding matrix **W**($f$) is designed based on the eigenvectors of an instantaneous whitened channel correlation matrix **H**($f$) of the form:

$$\mathbf{H}(f) = \mathbf{G}^H(f)\mathbf{K}_n^{-1}(f)\mathbf{G}(f) \qquad (2)$$

where $\mathbf{K}_n^{-1}(f)$ is the inverse of the noise correlation matrix **K**$_n$($f$).

However, the channel response is usually known to the receiver only through reference signals periodically sent by the transmitter on the forward link. The channel response as observed by the receiver is explicitly fed-back to the transmitter on the uplink (i.e., receiver-to-transmitter). Such channel response feedback typically includes $n_T$x$n_R$x$Nf$ complex channel coefficients and often consumes significant uplink overhead, especially for LTE (long term evolution) OFDM systems having a large frequency band (i.e., a large number of $Nf$ sub-carriers). Moreover, channel response feedback information in closed-loop MIMO systems typically changes at the fast fading rate, requiring more frequent use of uplink resources for transmitting the channel information in a timely manner.

Some conventional pre-coders are based only on long-term statistical channel information. These types of pre-coders obtain the pre-coding matrix **W**($f$) by calculating the eigenvectors of an averaged whitened channel correlation matrix H̃($f$) as given by:

$$\tilde{\mathbf{H}}(f) = E\{\mathbf{H}(f)\} \qquad (3)$$

where $E\{\cdot\}$ represents statistical averaging. Substituting Equation (2) into Equation (3) yields the following expression for the elements of matrix H̃($f$) :

$$\tilde{\mathbf{H}}(f; m_1, m_2) = \sum_{i_1=1}^{n_R} \sum_{i_2=1}^{n_R} K_G(m_1, m_2, i_1, i_2) K_n^{-1}(f; i_1, i_2) \qquad (4)$$

where

$$K_G(m_1,m_2,i_1,i_2) = E\{G(f;m_1,i_1)G^*(f;m_2,i_2)\} \qquad (5)$$

is the statistical correlation between downlink (i.e., transmitter-to-receiver) channels $G(f;m_1,i_1)$ and $G(f;m_2,i_2)$. Downlink channel $G(f;m_1,i_1)$ describes signal propagation from transmit antenna $m_1$ to receive antenna $i_1$. Downlink channel $G(f;m_2,i_2)$ similarly describes signal propagation from transmit antenna $m_2$ to receive antenna $i_2$.

It is known that the statistical channel correlations $K_G(m_1,m_2,i_1,i_2)$ do not depend of frequency, as shown in Equation (5). Moreover, the whitened channel correlation matrix $\tilde{\mathbf{H}}(f;m_1,m_2)$ of equation (4) is not based on instantaneous channel state information as is $\mathbf{H}(f)$ of equation (2). Thus, $\tilde{\mathbf{H}}(f;m_1,m_2)$ is usually more stable and varies at a slower rate than $\mathbf{H}(f)$. Accordingly, uplink resources are needed less often to feedback the slow pre-coding matrix $\tilde{\mathbf{W}}(f)$ as compared to its instantaneous counterpart $\mathbf{W}(f)$.

However, even though the pre-coding matrix $\tilde{\mathbf{W}}(f)$ is transmitted less often, a significant amount of uplink resources are still needed each time the channel feedback information is transmitted because $\tilde{\mathbf{W}}(f)$ is frequency dependent. The amount of channel feedback information for MIMO OFDM systems is a function of the number of frequency sub-carriers employed. Accordingly, less uplink resources are available for uplink data communication when more sub-carriers are used. In addition, implementing $\tilde{\mathbf{W}}(f)$ as the pre-coding matrix at the transmitter requires a set of $n_T$x$Ns$ pre-filters, increasing base station complexity.

US 2007/0207730, published on 2007-009-06, discloses a wireless communication system including receiving and base stations. The receiving station includes a detector that measures a downlink channel correlation matrix for multiple antennas of a base station.

US 2007/0160156, published on 2007-07-12, discloses embodiments of a wireless communication system employing interference-sensitive mode slection.

## SUMMARY

According to the methods and apparatus disclosed herein, pre-coder techniques based on long-term statistical channel information are described that reduce channel feedback overhead and base station complexity. The receive antennas of the MIMO system are spaced approximately $\lambda/2$ apart (where A is wavelength). Under these conditions, channels between the receive antennas become effectively uncorrelated. As such, statistical correlations between different downlink channels can be computed for different ones of the transmit antennas and each receive antenna. By doing so, the channel correlations can be averaged over the different receive antennas to form a frequency-independent channel correlation matrix. Moreover, the noise variance is computed as a scalar and not a matrix. Employing a frequency-independent channel correlation matrix reduces how often the channel information is reported. Using a scalar to represent noise variance instead of a matrix decreases the amount of channel state feedback and thus the number of pre-filters used at the transmitter, reducing base station complexity.

The present invention is defined by the appended claims.

## BRIEF DESCRIPTION OF THE DRAWINGS

Figure 1 is a block diagram of an embodiment of a MIMO OFDM wireless communication system.
Figure 2 is a flow diagram of an embodiment of program logic for feeding-back channel quality information in a MIMO OFDM wireless communication system.
Figure 3 is a flow diagram of an embodiment of program logic for setting transmitter pre-filter weights based on channel quality feedback information.

## DETAILED DESCRIPTION

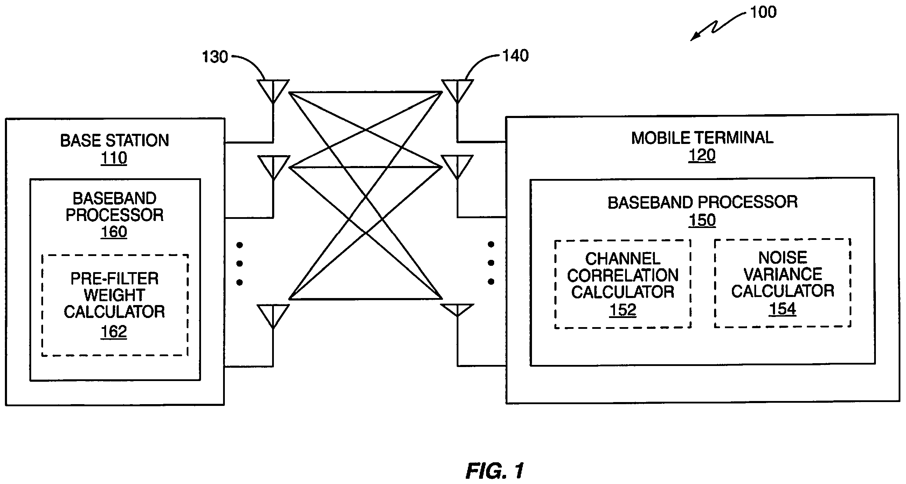

Figure 1 illustrates an embodiment of a MIMO OFDM wireless communication system 100 including a transmitter 110 such as a base station that services one or more wireless receivers 120 such as a mobile terminal. The transmitter 110 has two or more transmit antennas 130 for transmitting signal streams over downlink communication channels to the receiver 120 using a plurality of frequency sub-carriers. The receiver 120 similarly has two or more receive antennas 140 for receiving the transmitted signal streams. The receiver 120 includes a baseband processor 150 for processing the received signal streams, including channel response estimation. To this end, the baseband processor 150 includes a channel correlation calculator 152 and a noise variance calculator 154 for estimating the downlink channel response.

It can be shown that when the receive antennas 140 are spaced approximately $\lambda/2$ apart (i.e., ½ wavelength spacing), the channels between the antennas 140 become effectively uncorrelated. Under these receive antenna spacing conditions, equation (5) can be expressed as:

$$K_G(m_1, m_2, i_1, i_2) = K_{TX}(m_1, m_2, i_1) \cdot \delta(i_1 - i_2) \qquad (6)$$

where

$$K_{TX}(m_1, m_2, i) = E\{G(f; m_1, i)G^*(f; m_2, i)\} \qquad (7)$$

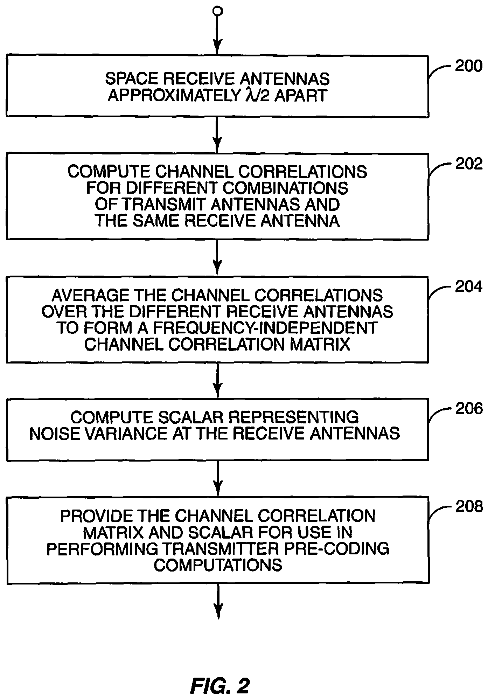

is the statistical correlation between downlink channels $G(f,m_1,i)$ and $G(f,m_2,i)$. The first downlink channel $G(f,m_1,i)$ describes signal propagation from transmit antenna $m_1$ to the $i^{th}$ receive antenna 140. The second downlink channel $G(f,m_2,i)$ similarly describes signal propagation from transmit antenna $m_2$ to the same $i^{th}$ receive antenna 140. Broadly, the channel correlation calculator 152 computes channel correlations $K_{TX}(m_1,m_2,i)$ for different combinations of the transmit antennas 130 and each receive antenna 140, e.g., as illustrated by Step 202 of Figure 2.

Substituting equation (6) into equation (4) yields a whitened channel correlation matrix given:

$$\tilde{\mathbf{H}}(f; m_1, m_2) = \sum_{i=1}^{n_R} K_{TX}(m_1, m_2; i)K_n^{-1}(f; i, i) \qquad (8)$$

The channel correlation calculator 152 computes the frequency-independent channel correlation matrix $\sum_{i=1}^{n_R} K_{TX}(m_1, m_2; i)$ by averaging the channel correlations $K_{TX}(m_1,m_2,i)$ over the $n_R$ receive antennas 140, e.g., as illustrated by Step 204 of Figure 2. In addition, the noise variance estimator 154 considers noise variance at the different receive antennas 140 to be approximately the same. Thus, equation (8) has the form:

$$\tilde{\mathbf{H}}(f; m_1, m_2) = \alpha(f)\sum_{i=1}^{n_R} K_{TX}(m_1, m_2; i) \qquad (9)$$

where

$$\alpha(f) = K_n^{-1}(f) \qquad (10)$$

and $K_n^{-1}$ are inverse noise (including interference) correlations computed by the noise variance calculator 154.

The whitened channel correlation matrix $\tilde{\mathbf{H}}(f,m_1,m_2)$ of equation (9) is thus the product of two terms. One term is the frequency-independent channel correlation matrix $\sum_{i=1}^{n_R} K_{TX}(m_1, m_2; i)$ which does not depend on frequency, and thus can be reported less often. The other term $\alpha(f)$ is a noise variance scalar that is the same for all transmit antennas 130 and can be viewed as a pre-filter, e.g., as illustrated by Step 206 of Figure 2. The frequency-independent channel correlation matrix $\sum_{i=1}^{n_R} K_{TX}(m_1, m_2; i)$ and the noise variance scalar $\alpha(f)$ are provided to the transmitter 110 for use in performing pre-coding computations, e.g., as illustrated by Step 208 of Figure 2.

According to one embodiment, the receiver 120 feeds back the terms to the transmitter 110 in the form of the whitened channel correlation matrix $\tilde{\mathbf{H}}(f,m_1,m_2)$ which is used by the transmitter 110 in pre-coding matrix computations. In another embodiment, the receiver 120 indirectly feeds back the terms to the transmitter 110 by computing a pre-coding matrix $\tilde{\mathbf{W}}(f)$ based on the whitened channel correlation matrix $\tilde{\mathbf{H}}(f,m_1,m_2)$ and transmitting the pre-coding matrix to the transmitter 110. In either case, the whitened channel correlation matrix $\tilde{\mathbf{H}}(f,m_1,m_2)$ can be derived from estimates of the frequency-independent channel correlation matrix $\sum_{i=1}^{n_R} K_{TX}(m_1, m_2; i)$ and the noise variance term $\alpha(f)$.

In one embodiment, the channel correlation calculator 152 estimates the channel correlations $K_{TX}(m_1, m_2, i)$ for different combinations of the transmit antennas 130 and each receive antenna 140. The channel estimates are long-term averaged over a plurality of frequency sub-carriers $N_f$ and a plurality of time slots $N$, as given by:

$$\hat{K}_{TX}(m_1, m_2, i) = \frac{1}{N_f N_t} \sum_{f=1}^{N_f} \sum_{t=1}^{N_t} \hat{G}_t(f; m_1, i) \cdot \hat{G}_t^*(f; m_2, i) \qquad (11)$$

where $\hat{K}_{TX}(m_1, m_2, i)$ is the resulting channel correlation estimate and $\hat{G}_t(f; m_1, i)$ is an estimate of the channel between the $m^{th}$ transmit antenna and the $i^{th}$ receive antenna at time $t$.

The noise variance calculator 154 similarly estimates the noise correlations $K_n(f; i_1, i_2)$ based on certain noise samples over pilot symbols for each frequency $f$. An estimate $\hat{K}_n^{-1}(f; i_1, i_2)$ of the inverse noise correlations $K_n^{-1}(f; i_1, i_2)$ can be obtained from the estimate of $K_n(f; i_1, i_2)$. Substituting the inverse noise correlation expression into equation (10) provides:

$$\hat{\alpha}(f) = \hat{K}_n^{-1}(f) \qquad (12)$$

Combining equations (11) and (12) yields an estimate of the whitened channel correlation matrix $\tilde{H}(f; m_1, m_2)$ given by:

$$\hat{H}(f; m_1, m_2) = \hat{\alpha}(f) \sum_{i=1}^{n_R} \hat{K}_{TX}(m_1, m_2; i) \qquad (13)$$

The pre-coding matrix $\tilde{W}(f)$ can then be obtained based on eigenvectors of the channel response estimate matrix $\hat{H}(f; m_1, m_2)$ as given by:

$$\tilde{W}(f) = \beta(f) \cdot \Psi \qquad (14)$$

where

$$\beta(f) = \frac{\hat{\alpha}(f)}{\sqrt{\int \hat{\alpha}(f) df}}$$

and $\Psi$ are the eigenvectors of the matrix $\sum_{i=1}^{n_R} \hat{K}_{TX}(m_1, m_2; i)$. This expression for the pre-coding matrix can also be obtained when noise at the receive antennas 140 is considered relatively spatially uncorrelated. Under these conditions, the noise correlation matrix $K_n(f)$ has the form:

$$K_n(f) = diag\{\sigma^2(f; 1), \sigma^2(f; 2), \cdots, \sigma^2(f; n_R)\} \qquad (15)$$

where $\sigma^2(f; i)$ is the noise variance at the $i^{th}$ receive antenna.
Substituting equation (15) into equation (4) yields the whitened channel correlation matrix $\tilde{H}(f; m_1, m_2)$ with elements given by:

$$\tilde{\mathbf{H}}(f;m_1,m_2) = \sum_{i=1}^{n_R} \frac{1}{\sigma^2(f,i)} K_{TX}(m_1,m_2;i) \qquad (16)$$

In one embodiment, the noise variance $\sigma^2(f,i)$ at the different receive antennas is considered to be approximately the same. Thus, the whitened channel correlation matrix $\tilde{\mathbf{H}}(f;m_1,m_2)$ becomes:

$$\tilde{\mathbf{H}}(f;m_1,m_2) = \frac{1}{\sigma^2(f)} \sum_{i=1}^{n_R} K_{TX}(m_1,m_2;i) \qquad (17)$$

which coincides with equation (9). Accordingly, the pre-coder expression of equation (14) can be viewed as an optimal slow pre-coder for spatially uncorrelated noise. This does not result in the MIMO system 100 ignoring real noise correlation between the receive antennas 140 because the receiver baseband processor 150 addresses noise correlation.

The pre-coder expression of equation (14) can be further simplified by averaging the channel response estimate matrix $\hat{\mathbf{H}}(f;m_1,m_2)$ over frequency. The frequency-dependent noise variance scalar $\alpha(f)$ is also averaged over frequency to obtain a frequency-independent noise variance scalar $\alpha$. Under these conditions, the pre-coding matrix $\tilde{\mathbf{W}}(f)$ of equation (14) reduces to:

$$\tilde{\mathbf{W}}(f) = \beta \cdot \Psi \qquad (18)$$

where $\beta$ is selected to satisfy the transmitted power constraint.

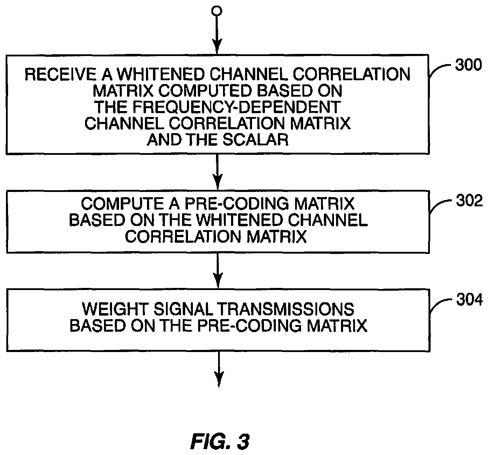

The transmitter 110 uses the pre-coding matrix $\tilde{\mathbf{W}}(f)$ to optimally focus the power and direction of the transmit antennas 130. The transmit antennas 130 are optimally focused by matching pre-filter weights to channel and noise conditions represented by the pre-coding matrix $\tilde{\mathbf{W}}(f)$. In one embodiment, pre-filter weights for the transmit antennas 130 are set using the pre-coding matrix $\tilde{\mathbf{W}}(f)$. In more detail, the transmitter 110 includes a baseband processor 160. The transmitter baseband processor 160 decodes the feed back signal in order to reconstruct the pre-coding matrix $\tilde{\mathbf{W}}(f)$ computed by the receiver 120. Alternatively, the transmitter baseband processor 160 decodes the feedback signal to reconstruct the whitened channel correlation matrix $\tilde{\mathbf{H}}(f;m_1,m_2)$ received from the receiver 120. The whitened channel correlation matrix $\tilde{\mathbf{H}}(f;m_1,m_2)$ is computed by the receiver 120 based on the noise variance scalar $\alpha(f)$ or $\alpha$ and the frequency-independent channel correlation matrix $\sum_{i=1}^{n_R} K_{TX}(m_1,m_2;i)$, e.g., as illustrated by Step 300 of Figure 3.

A pre-filter weight calculator 162 included in or associated with the transmitter baseband processor 160 computes the pre-coding matrix $\tilde{\mathbf{W}}(f)$ based on the whitened channel correlation matrix $\tilde{\mathbf{H}}(f;m_1,m_2)$, e.g., as illustrated by Step 302 of Figure 3. In one embodiment, the transmitter baseband processor 160 derives eigenvectors $\Psi$ from the whitened channel correlation matrix $\tilde{\mathbf{H}}(f;m_1,m_2)$ to compute the pre-coding matrix $\tilde{\mathbf{W}}(f)$ as given by equation (14) or equation (18). The transmitter baseband processor 160 then weights signal transmissions to the receiver 120 based on the pre-coding matrix $\tilde{\mathbf{W}}(f)$, e.g., as illustrated by Step 304 of Figure 3. This way, multiple signal streams can be emitted from the transmit antennas 130 with independent and appropriate weighting such that link throughput is maximized at the receiver 120.

Of course, other variations are contemplated. Thus, the foregoing description and the accompanying drawings represent non-limiting examples of the methods and apparatus taught herein for the transmission of system information. As such, the present invention is not limited by the foregoing description and accompanying drawings. Instead, the present invention is limited only by the following claims.

## Claims

1. A method of feeding back channel state information from a receiver having two or more receive antennas spaced approximately $\lambda/2$ apart to a transmitter having two or more transmit antennas, the method comprising:

   deriving channel estimates for different transmit and receive antenna combinations;
   long-term averaging the channel estimates over a plurality of frequency sub-carriers and a plurality of time slots;
   computing frequency-independent channel correlations from the long-term averaged channel estimates for

different combinations of the transmit antennas and each receive antenna (202);
averaging the channel correlations over all the different receiving antennas to form a frequency-independent channel correlation matrix (204);
computing a scalar representing noise variance at the receive antennas (206) based on noise samples over pilot symbols for each frequency; and
feeding back the frequency-independent channel correlation matrix and the scalar for use in performing transmitter pre-coding computations (208).

**2.** The method of claim 1, further comprising averaging the scalar over frequency to make the scalar frequency-independent.

**3.** The method of claim 1, wherein computing the scalar further comprises computing a scalar noise variance estimate for each of the different receive antennas.

**4.** The method of claim 1, wherein computing the scalar further comprises forming a vector from diagonal components of a noise correlation matrix.

**5.** The method of claim 1, wherein feeding back the frequency-independent channel correlation matrix and the scalar for use in performing transmitter pre-coding computations further comprises:

computing a whitened channel correlation matrix based on the frequency-independent channel correlation matrix and the scalar; and
transmitting the whitened channel correlation matrix to the transmitter for use in performing transmitter pre-coding computations.

**6.** The method of claim 5, wherein computing a whitened channel correlation matrix based on the frequency-independent channel correlation matrix and the scalar further comprises:

scaling the channel correlations with the scalar when the noise variance at the receive antennas is not relatively the same; and
averaging the scaled channel correlations over the different receive antennas.

**7.** The method of claim 5, wherein computing a whitened channel correlation matrix based on the frequency-independent channel correlation matrix and the scalar further comprises:

averaging the channel correlations over the different receive antennas when the noise variance at the receive antennas is relatively the same; and
scaling the averaged channel correlations with the scalar.

**8.** The method of claim 1, wherein feeding back the frequency-independent channel correlation matrix and the scalar for use in performing transmitter pre-coding computations further comprises:

computing a pre-coding matrix based on the frequency-independent channel correlation matrix and the scalar; and
transmitting the pre-coding matrix to the transmitter.

**9.** The method of claim 8, wherein computing a pre-coding matrix based on the frequency-independent channel correlation matrix and the scalar further comprises:

computing a whitened channel correlation matrix based on the frequency-independent channel correlation matrix and the scalar; and
deriving eigenvectors from the whitened channel correlation matrix.

**10.** A receiver (120), comprising:

two or more receive antennas (140) spaced approximately $\lambda/2$ apart; and
a baseband processor (150) configured to:

derive channel estimates for different transmit and receive antenna combinations;
long-term average the channel estimates over a plurality of frequency sub-carriers and a plurality of time slots to compute the channel correlations;
compute frequency-independent channel correlations from the long-term averaged channel estimates for different combinations of transmit antennas and each receive antenna (202);
average the channel correlations over all the receiving antennas to form a frequency-independent channel correlation matrix (204);
compute a scalar representing noise variance at the receive antennas (206) based on noise samples over pilot symbols for each frequency; and
feed back the frequency-independent channel correlation matrix and the scalar for use in performing transmitter pre-coding computations (208).

11. The receiver (120) of claim 10, wherein the baseband processor (150) is configured to average the scalar over frequency to make the scalar frequency-independent.

12. The receiver (120) of claim 10, wherein the baseband processor (150) is configured to compute a scalar noise variance estimate for each of the different receive antennas.

13. The receiver (120) of claim 10, wherein the baseband processor (150) is configured to compute the scalar by forming a vector from diagonal components of a noise correlation matrix.

14. The receiver (120) of claim 10, wherein the baseband processor (150) is configured to:

compute a whitened channel correlation matrix based on the frequency-independent channel correlation matrix and the scalar; and
transmit the whitened channel correlation matrix for use in performing transmitter pre-coding computations.

15. The receiver (120) of claim 14, wherein the baseband processor (150) is configured to:

scale the channel correlations with the scalar when the noise variance at the receive antennas is not relatively the same; and
average the scaled channel correlations over the different receive antennas to compute the whitened channel correlation matrix.

16. The receiver (120) of claim 14, wherein the baseband processor (150) is configured to:

average the channel correlations over the different receive antennas when the noise variance at the receive antennas is relatively the same; and
scale the averaged channel correlations with the scalar to compute the whitened channel correlation matrix.

17. The receiver (120) of claim 10, wherein the baseband processor (150) is configured to:

compute a pre-coding matrix based on the frequency-independent channel correlation matrix and the scalar; and
transmit the pre-coding matrix.

18. The receiver (120) of claim 17, wherein the baseband processor (150) is configured to:

compute a whitened channel correlation matrix based on the frequency-independent channel correlation matrix and the scalar; and
derive eigenvectors from the whitened channel correlation matrix to form the pre-coding matrix.

**Patentansprüche**

1. Verfahren zum Rückeinspeisen von Kanalstatus-Informationen von einem Empfänger mit zwei oder mehr etwa $\lambda/2$ voneinander beabstandeten Empfangsantennen an einen Sender mit zwei oder mehr Sendeantennen, wobei das Verfahren Folgendes umfasst:

Gewinnen von Kanalschätzwerten für verschiedene Sende und Empfangsantennenkombinationen;

langfristiges Mitteln der Kanalschätzwerte über eine Vielzahl von Frequenz-Zwischenträgern und eine Vielzahl von Zeitschlitzen;

Berechnen von frequenzunabhängigen Kanalkorrelationen aus den langfristig gemittelten Kanalschätzwerten für verschiedene Kombinationen der Sendeantennen und jede Empfangsantenne (202);

Mitteln der Kanalkorrelationen über alle verschiedenen Empfangsantennen, um eine frequenzunabhängige Kanalkorrelations-Matrix (204) zu bilden;

Berechnen eines Skalars, der auf der Grundlage von Rauschproben über Pilotsymbole für jede Frequenz Rausch-Streuung an den Empfangsantennen (206) darstellt; und

Rückeinspeisen der frequenzunabhängigen Kanalkorrelations-Matrix und des Skalars zur Verwendung beim Durchführen von Sender-Präcodierungs-Berechnungen (208).

2. Verfahren nach Anspruch 1, weiter umfassend das Mitteln des Skalars über die Frequenz, um den Skalar frequenzunabhängig zu machen.

3. Verfahren nach Anspruch 1, wobei Berechnen des Skalars weiter das Berechnen eines Skalar-Rausch-Streuungs-Schätzwertes für jede der verschiedenen Empfangsantennen umfasst.

4. Verfahren nach Anspruch 1, wobei das Berechnen des Skalars weiter das Bilden eines Vektors aus diagonalen Komponenten einer Rausch-Korrelations-Matrix umfasst.

5. Verfahren nach Anspruch 1, wobei das Rückeinspeisen der frequenzunabhängigen Kanalkorrelations-Matrix und des Skalars zur Verwendung beim Durchführen von Sender-Präcodierungs-Berechnungen weiter Folgendes umfasst:

Berechnen einer geweißten Kanalkorrelations-Matrix auf Grundlage der frequenzunabhängigen Kanalkorrelations-Matrix und des Skalars; und

Senden der geweißten Kanalkorrelations-Matrix an den Sender zur Verwendung beim Durchführen von Sender-Präcodierungs-Berechnungen.

6. Verfahren nach Anspruch 5, wobei das Berechnen einer geweißten Kanalkorrelations-Matrix auf Grundlage der frequenzunabhängigen Kanalkorrelations-Matrix und des Skalars weiter Folgendes umfasst:

Skalieren der Kanalkorrelationen mit dem Skalar, wenn die Rausch-Streuung an den Empfangsantennen nicht vergleichsweise die gleiche ist; und

Mitteln der skalierten Kanalkorrelationen über die verschiedenen Empfangsantennen.

7. Verfahren nach Anspruch 5, wobei das Berechnen einer geweißten Kanalkorrelations-Matrix auf Grundlage der frequenzunabhängigen Kanalkorrelations-Matrix und des Skalars weiter Folgendes umfasst:

Mitteln der Kanalkorrelationen über die verschiedenen Empfangsantennen, wenn die Rausch-Streuung an den Empfangsantennen vergleichsweise die gleiche ist; und

Skalieren der gemittelten Kanalkorrelationen mit dem Skalar.

8. Verfahren nach Anspruch 1, wobei das Rückeinspeisen der frequenzunabhängigen Kanalkorrelations-Matrix und des Skalars zur Verwendung beim Durchführen von Sender-Präcodierungs-Berechnungen weiter Folgendes umfasst:

Berechnen einer Präcodierungsmatrix auf Grundlage der frequenzunabhängigen Kanalkorrelations-Matrix und des Skalars; und

Senden der Präcodierungsmatrix an den Sender.

9. Verfahren nach Anspruch 8, wobei das Berechnen einer Präcodierungsmatrix auf Grundlage der frequenzunabhängigen Kanalkorrelations-Matrix und des Skalars weiter Folgendes umfasst:

Berechnen einer geweißten Kanalkorrelations-Matrix auf Grundlage der frequenzunabhängigen Kanalkorrelations-Matrix und des Skalars; und

Gewinnen von Eigenvektoren aus der geweißten Kanalkorrelations-Matrix.

10. Empfänger (120), Folgendes umfassend:

zwei oder mehr etwa λ/2 voneinander beabstandete Empfangsantennen (140); und einen Basisbandprozessor (150), der konfiguriert ist, um:

Kanalschätzwerte für verschiedene Sende- und Empfangsantennenkombinationen zu gewinnen;
die Kanalschätzwerte über eine Vielzahl von FrequenzZwischenträgern und einer Vielzahl von Zeitschlitzen langfristig zu mitteln;
aus den langfristig gemittelten Kanalschätzwerten für verschiedene Kombinationen von Sendeantennen und jede Empfangsantenne (202) frequenzunabhängige Kanalkorrelationen zu berechnen;
die Kanalkorrelationen über alle Empfangsantennen zu mitteln, um eine frequenzunabhängige Kanalkorrelations-Matrix (204) zu bilden;
einen Skalar zu berechnen, der auf Grundlage von Rauschproben über Pilotsymbole für jede Frequenz Rausch-Streuung an den Empfangsantennen (206) darstellt; und
die frequenzunabhängige Kanalkorrelations-Matrix und den Skalar zur Verwendung beim Durchführen von Sender-Präcodierungs-Berechnungen (208) rückeinzuspeisen.

11. Empfänger (120) nach Anspruch 10, wobei der Basisbandprozessor (150) konfiguriert ist, um den Skalar über die Frequenz zu mitteln, um den Skalar frequenzunabhängig zu machen.

12. Empfänger (120) nach Anspruch 10, wobei der Basisbandprozessor (150) konfiguriert ist, um einen Skalar-Rausch-Streuungs-Schätzwert für jede der verschiedenen Empfangsantennen zu berechnen.

13. Empfänger (120) nach Anspruch 10, wobei der Basisbandprozessor (150) konfiguriert ist, um durch das Bilden eines Vektors aus diagonalen Komponenten einer Rausch-Korrelations-Matrix den Skalar zu berechnen.

14. Empfänger (120) nach Anspruch 10, wobei der Basisbandprozessor (150) konfiguriert ist, um:

auf Grundlage der frequenzunabhängigen Kanalkorrelations-Matrix und des Skalars eine geweißte Kanalkorrelations-Matrix zu berechnen; und
die geweißte Kanalkorrelations-Matrix zur Verwendung beim Durchführen von Sender-Präcodierungs-Berechnungen zu senden.

15. Empfänger (120) nach Anspruch 14, wobei der Basisbandprozessor (150) konfiguriert ist, um:

die Kanalkorrelationen mit dem Skalar zu skalieren, wenn die Rausch-Streuung an den Empfangsantennen nicht vergleichsweise die gleiche ist; und
die skalierten Kanalkorrelationen über die verschiedenen Empfangsantennen zu mitteln, um die geweißte Kanalkorrelations-Matrix zu berechnen.

16. Empfänger (120) nach Anspruch 14, wobei der Basisbandprozessor (150) konfiguriert ist, um:

die Kanalkorrelationen über die verschiedenen Empfangsantennen zu mitteln, wenn die Rausch-Streuung an den Empfangsantennen vergleichsweise die gleiche ist; und
die gemittelten Kanalkorrelationen mit dem Skalar zu skalieren, um die geweißte Kanalkorrelations-Matrix zu berechnen.

17. Empfänger (120) nach Anspruch 10, wobei der Basisbandprozessor (150) konfiguriert ist, um:

auf der Grundlage der frequenzunabhängigen Kanalkorrelations-Matrix und des Skalars eine Präcodierungsmatrix zu berechnen; und
die Präcodierungsmatrix zu senden.

18. Empfänger (120) nach Anspruch 17, wobei der Basisbandprozessor (150) konfiguriert ist, um:

auf der Grundlage der frequenzunabhängigen Kanalkorrelations-Matrix und des Skalars eine geweißte Kanalkorrelations-Matrix zu berechnen; und
aus der geweißten Kanalkorrelations-Matrix Eigenvektoren zu gewinnen, um die Präcodierungsmatrix zu bilden.

**Revendications**

1. Procédé de réinjection d'informations d'états de canal d'un récepteur, ayant deux antennes de réception ou plus espacées approximativement de $\lambda/2$, à un émetteur ayant deux antennes d'émission ou plus, le procédé comprenant :

   la déduction d'estimations de canal pour différentes combinaisons d'antennes d'émission et de réception ;
   le calcul de la moyenne à long terme des estimations de canal sur une pluralité de sous-porteuses fréquentielles et sur une pluralité de créneaux temporels ;
   le calcul de corrélations de canaux indépendantes de la fréquence à partir des estimations de canal moyennées à long terme pour différentes combinaisons des antennes d'émission et pour chaque antenne de réception (202) ;
   le calcul de la moyenne des corrélations de canaux sur toutes les différentes antennes de réception pour former une matrice de corrélation de canaux indépendante de la fréquence (204) ;
   le calcul d'un scalaire représentant une variance de bruit au niveau des antennes de réception (206) sur la base d'échantillons de bruit sur des symboles pilotes pour chaque fréquence ; et
   la réinjection de la matrice de corrélation de canaux indépendante de la fréquence et du scalaire aux fins d'utilisation dans la réalisation de calculs de précodage d'émetteur (208).

2. Procédé selon la revendication 1, comprenant en outre le calcul de la moyenne du scalaire sur les fréquences pour rendre le scalaire indépendant de la fréquence.

3. Procédé selon la revendication 1, dans lequel le calcul du scalaire comprend en outre le calcul d'une estimation de variance de bruit de scalaire pour chacune des différentes antennes de réception.

4. Procédé selon la revendication 1, dans lequel le calcul du scalaire comprend en outre la formation d'un vecteur à partir d'éléments diagonaux d'une matrice de corrélation de bruit.

5. Procédé selon la revendication 1, dans lequel la réinjection de la matrice de corrélation de canaux indépendante de la fréquence et du scalaire à utiliser dans la réalisation d'un calcul de précodage d'émetteur comprend en outre :

   le calcul d'une matrice de corrélation de canaux blanchie sur la base de la matrice de corrélation de canaux indépendante de la fréquence et du scalaire ; et
   la transmission de la matrice de corrélation de canaux blanchie à l'émetteur aux fins d'utilisation dans la réalisation de calculs de précodage d'émetteur.

6. Procédé selon la revendication 5, dans lequel le calcul d'une matrice de corrélation de canaux blanchie sur la base de la matrice de corrélation de canaux indépendante de la fréquence et du scalaire comprend en outre :

   la multiplication des corrélations de canaux avec le scalaire lorsque la variance de bruit au niveau des antennes de réception n'est pas relativement la même ; et
   le calcul de la moyenne des corrélations de canaux multipliées sur les différentes antennes de réception.

7. Procédé selon la revendication 5, dans lequel le calcul d'une matrice de corrélation de canaux blanchie sur la base de la matrice de corrélation de canaux indépendante de la fréquence et du scalaire comprend en outre :

   le calcul de la moyenne des corrélations de canaux sur les différentes antennes de réception lorsque la variance de bruit au niveau des antennes de réception est relativement la même ; et
   la multiplication par le scalaire des corrélations de canaux moyennées.

8. Procédé selon la revendication 1, dans lequel la réinjection de la matrice de corrélation de canaux indépendamment de la fréquence et du scalaire aux fins d'utilisation dans la réalisation de calculs de précodage d'émetteur comprend en outre :

   le calcul d'une matrice de précodage sur la base de la matrice de corrélation de canaux indépendante de la fréquence et du scalaire ; et
   la transmission de la matrice de précodage à l'émetteur.

9. Procédé selon la revendication 8, dans lequel le calcul d'une matrice de précodage sur la base de la matrice de corrélation de canaux indépendante de la fréquence et du scalaire comprend en outre :

le calcul d'une matrice de corrélation de canaux blanchie sur la base de la matrice de corrélation de canaux indépendante de la fréquence et du scalaire ; et

la déduction de vecteurs propres à partir de la matrice de corrélation de canaux blanchie.

**10.** Récepteur (120), comprenant :

deux antennes de réception ou plus (140) espacées approximativement de $\lambda/2$ ; et
un processeur de base de bande (150) configuré pour :

déduire des estimations de canal pour différentes combinaisons d'antennes d'émission et de réception ;
calculer la moyenne à long terme des estimations de canal pour une pluralité de sous-porteuses fréquentielles et une pluralité de créneaux temporels pour calculer les corrélations de canaux ;
calculer des corrélations de canaux indépendantes de la fréquence à partir des estimations de canal moyennées à long terme pour différentes combinaisons d'antennes d'émission et pour chaque antenne de réception (202) ;
calculer la moyenne des corrélations de canaux sur toutes les antennes de réception pour former une matrice de corrélation de canaux indépendante de la fréquence (204) ;
calculer un scalaire représentant une variance de bruit au niveau des antennes de réception (206) sur la base d'échantillons de bruit sur des symboles pilotes pour chaque fréquence ; et
réinjecter la matrice de corrélation de canaux indépendante de la fréquence et le scalaire aux fins d'utilisation dans la réalisation de calculs de précodage d'émetteur (208).

**11.** Récepteur (120) selon la revendication 10, dans lequel le processeur de base de bande (150) est configuré pour calculer la moyenne du scalaire sur les fréquences pour rendre le scalaire indépendant de la fréquence.

**12.** Récepteur (120) selon la revendication 10, dans lequel le processeur de base de bande (150) est configuré pour calculer une estimation de variance de bruit de scalaire pour chacune des différentes antennes de réception.

**13.** Récepteur (120) selon la revendication 10, dans lequel le processeur de base de bande (150) est configuré pour calculer le scalaire en formant un vecteur à partir d'éléments diagonaux d'une matrice de corrélation de bruit.

**14.** Récepteur (120) selon la revendication 10, dans lequel le processeur de base de bande (150) est configuré pour :

calculer une matrice de corrélation de canaux blanchie sur la base de la matrice de corrélation de canaux indépendante de la fréquence et du scalaire ; et
transmettre la matrice de corrélation de canaux blanchie aux fins d'utilisation dans la réalisation de calculs de précodage d'émetteur.

**15.** Récepteur (120) selon la revendication 14, dans lequel le processeur de base de bande (150) est configuré pour :

multiplier les corrélations de canaux avec le scalaire lorsque la variance de bruit au niveau des antennes de réception n'est pas relativement la même ; et
calculer la moyenne des corrélations de canaux multipliées pour les différentes antennes de réception pour calculer la matrice de corrélation de canaux blanchie.

**16.** Récepteur (120) selon la revendication 14, dans lequel le processeur de base de bande (150) est configuré pour :

calculer la moyenne des corrélations de canaux sur les différentes antennes de réception lorsque la variance de bruit au niveau des antennes de réception est relativement la même ; et
multiplier les corrélations de canaux moyennées avec le scalaire pour calculer la matrice de corrélation de canaux blanchie.

**17.** Récepteur (120) selon la revendication 10, dans lequel le processeur de base de bande (150) est configuré pour :

calculer une matrice de précodage sur la base de la matrice de corrélation de canaux indépendante de la fréquence et du scalaire ; et
transmettre la matrice de précodage.

**18.** Récepteur (120) selon la revendication 17, dans lequel le processeur de base de bande (150) est configuré pour :

calculer une matrice de corrélation de canaux blanchie sur la base de la matrice de corrélation de canaux indépendante de la fréquence et du scalaire ; et

déduire des vecteurs propres de la matrice de corrélation de canaux blanchie pour former la matrice de précodage.

*FIG. 1*

SPACE RECEIVE ANTENNAS
APPROXIMATELY λ/2 APART $\quad$ 200

COMPUTE CHANNEL CORRELATIONS
FOR DIFFERENT COMBINATIONS
OF TRANSMIT ANTENNAS AND
THE SAME RECEIVE ANTENNA $\quad$ 202

AVERAGE THE CHANNEL CORRELATIONS
OVER THE DIFFERENT RECEIVE ANTENNAS
TO FORM A FREQUENCY-INDEPENDENT
CHANNEL CORRELATION MATRIX $\quad$ 204

COMPUTE SCALAR REPRESENTING
NOISE VARIANCE AT THE RECEIVE ANTENNAS $\quad$ 206

PROVIDE THE CHANNEL CORRELATION
MATRIX AND SCALAR FOR USE IN
PERFORMING TRANSMITTER PRE-CODING
COMPUTATIONS $\quad$ 208

*FIG. 2*

RECEIVE A WHITENED CHANNEL CORRELATION
MATRIX COMPUTED BASED ON
THE FREQUENCY-DEPENDENT
CHANNEL CORRELATION MATRIX
AND THE SCALAR — 300

COMPUTE A PRE-CODING MATRIX
BASED ON THE WHITENED CHANNEL
CORRELATION MATRIX — 302

WEIGHT SIGNAL TRANSMISSIONS
BASED ON THE PRE-CODING MATRIX — 304

*FIG. 3*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070207730 A

- US 20070160156 A